(19) **Europäisches Patentamt**
European Patent Office
Office européen des brevets

(11) **EP 1 460 433 B1**

(12) **EUROPÄISCHE PATENTSCHRIFT**

(45) Veröffentlichungstag und Bekanntmachung des Hinweises auf die Patenterteilung:
**08.02.2012 Patentblatt 2012/06**

(51) Int Cl.:
***G01P 5/20*** *(2006.01)*     ***G01P 5/22*** *(2006.01)*

(21) Anmeldenummer: **03027013.6**

(22) Anmeldetag: **22.11.2003**

(54) **Verfahren zur Bestimmung der Abbildungsgleichung für die Selbstkalibrierung von Stereo-PIV-Verfahren**

Method for the determination of the imaging transformation for the autocalibration of Stereo-PIV methods

Méthode de détermination de l'équation de conjugaison pour l'autocalibration des procédés Stéréo-PIV

(84) Benannte Vertragsstaaten:
**FR GB**

(30) Priorität: **21.03.2003 DE 10312696**

(43) Veröffentlichungstag der Anmeldung:
**22.09.2004 Patentblatt 2004/39**

(73) Patentinhaber: **LaVision GmbH**
**37081 Göttingen (DE)**

(72) Erfinder: **Wieneke, Bernhard**
**37085 Göttingen (DE)**

(74) Vertreter: **Walther, Walther & Hinz GbR**
**Heimradstrasse 2**
**34130 Kassel (DE)**

(56) Entgegenhaltungen:
**DE-A1- 19 801 615    DE-A1- 19 928 698**

- **BRUECKER CH: "DUAL-CAMERA DPIV FOR FLOW STUDIES PAST ARTIFICIAL HEART VALVES" EXPERIMENTS IN FLUIDS, SPRINGER, HEIDELBERG, DE, Bd. 22, Nr. 6, April 1997 (1997-04), Seiten 496-506, XP000737227 ISSN: 0723-4864**
- **WILLERT C.: "STEREOSCOPIC DIGITAL PARTICLE IMAGE VELOCIMETRY FOR APPLICATION IN WIND TUNNEL FLOWS", MEASUREMENT SCIENCE AND TECHNOLOGY, vol. 8, no. 12, 12 January 1997 (1997-01-12), pages 1465-1479, XP020064381, ISSN: 0957-0233**

## Beschreibung

Die Erfindung betrifft ein Verfahren zur Bestimmung der Abbildungsgleichung für die Selbstkalibrierung in Bezug auf die Durchführung von Stereo-PIV-Verfahren bei visualisierten Strömungen, umfassend mindestens zwei Kameras und einen Bildausschnitt, wobei die Kameras in etwa den gleichen Bereich des Lichtschnittes, aber aus unterschiedlichen Richtungen betrachten, wobei die Ermittlung der Punktkorrespondenzen zwischen den zwei Kameras durch Messung der Verschiebung der jeweiligen Interrogationsfelder in den Kamerabildern mittels optischer Kreuzkorrelation erfolgt.

Zunächst einmal ist zu erklären, was unter einem PIV-Verfahren zu verstehen ist. PIV ist die Abkürzung für Particle Image Velocimetry. Mit Hilfe des PIV können die Strömungsverhältnisse eines Gases oder eines Fluids in einem Raum dargestellt werden (z. B. DE 199 28 698 A1 ). Zur Durchführung eines solchen PIV-Verfahrens ist zunächst einmal ein Laser oder eine andere geeignete Lichtquelle erforderlich, die im Fluss eines Mediums, z. B. eines Gases oder einer Flüssigkeit, einen sogenannten Lichtschnitt erzeugt, wobei dieser Lichtschnitt durch mindestens eine Kamera betrachtet wird. Mit nur einer Kamera, die senkrecht auf den Lichtschnitt ausgerichtet ist, können die beiden Geschwindigkeitskomponenten in der Lichtebene bestimmt werden, während mit mindestens zwei Kameras (Stereo-PIV), die den Lichtschnitt aus unterschiedlichen Winkeln beobachten, alle drei Komponenten bestimmt werden. Der Sinn des PIV-Verfahrens liegt, wie bereits erläutert darin, zweiund dreidimensionale Geschwindigkeitsfelder zu vermessen; um die Geschwindigkeit des solchen Mediums in einem Raum zu visualisieren, werden der Flüssigkeit oder dem Gas kleine Partikel zugegeben, die dem Fluss unmittelbar folgen. Zur Durchführung dieses Stereo-PIV-Verfahrens ist es erforderlich, dass zunächst eine Kalibrierung stattfindet, was bedeutet, dass die Position der Kameras zur Lichtschnittebene bestimmt wird, was schlussendlich durch die Ermittlung der Abbildungsgleichung

$$\begin{pmatrix} x_1, y_1 \\ x_2, y_2 \end{pmatrix} = M\ (x,\ y,\ z)$$

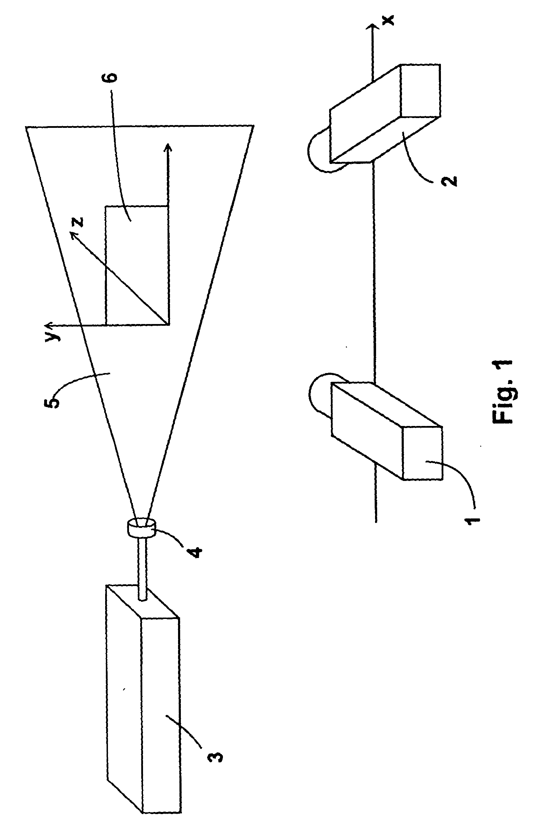

erfolgt, wobei $x_i$, $y_i$ die Bildkoordinaten eines Raumpunktes $(x, y, z)$ im Bild der Kamera 1 und 2 (siehe Figur 1) darstellen. Üblicherweise wird das Koordinatensystem so festgelegt, dass die Lichtschnittebene einem konstanten z (z. B. z=0) entspricht. Als Abbildungsfunktion M wird oft das Lochkameramodel genommen, bei dem die Abbildung durch externe Parameter - Orientierung und Position der Kameras zueinander und zum Lichtschnitt - sowie interne Kameraparameter - u. a. durch den Abstand des Kamera-Chips zur imaginären Lochblende (Bildweite) und durch den Fußpunkt (Hauptpunkt) der optischen Hauptachse auf dem Kamera-Chip - bestimmt wird. Mit Hilfe weniger zusätzlicher Verzerrungsparameter ist es möglich, die Abbildung mit einer Genauigkeit von besser als 0,1 Pixel zu bestimmen. Die Kalibrierung erfolgt nach dem Stand der Technik mit Hilfe einer sogenannten Kalibrierplatte, die von den beiden Kameras an einer oder mehreren Positionen in dem Raum aufgenommen wird, wovon eine Position genau der Lichtschnittebene entsprechen muss.

Die Abbildungsgleichung kann nun zum Einen mit Hilfe der Kalibrierplatte und der Kenntnis der absoluten Position der beiden Kameras im Raum erfolgen, oder aber mit Hilfe der Kalibrierplatte, dem Winkel und der Orientierung der Kameras zur Kalibrierplatte und dem Abstand der Kameras zur Kalibrierplatte, oder aber mit Hilfe einer Kalibrierplatte, die durch die Kameras an zwei oder mehr z-Positionen erfasst wird.

Bekannt ist ebenfalls die Verwendung einer sogenannten dreidimensionalen Kalibrierplatte zur Ermittlung der Abbildungsgleichung, wobei eine derartige dreidimensionale Kalibrierplatte z. B. zwei Ebenen aufweist, wobei eine jede Ebene mit einem Raster von z. B. 10 x 10 Markierungen in einem festen Abstand versehen ist. Diese bekannten Methoden der Kalibrierung haben verschiedene Nachteile. So ist es erforderlich, dass die Kalibrierplatte an der selben Stelle und exakt parallel zum Licht stehend dort positioniert werden muss. Dies ist sehr aufwendig zu realisieren; selbst kleine Abweichungen von 0,6° bedeuten am Bildrand eine Positionsungenauigkeit von 10 Pixel bei der Vektorbestimmung in den zwei Bildausschnitten, die bei starken Geschwindigkeitsgradienten zu Fehlern im hohen Prozentbereich führen können. Der Aufwand für die Kalibrierung ist hoch. Bei großen Beobachtungsfeldern müssen entsprechend große Kalibrierplatten gefertigt werden, die eventuell noch um einen exakten Betrag in Z-Richtung gleichmäßig verschoben werden müssen. Oder es ist eine Winkelbestimmung bzw. auch eine Abstandsbestimmung erforderlich, was ebenfalls aufwendig und fehlerbehaftet ist. Es ist z. B. schwierig, bei der Abstandsbestimmung die Strecke zwischen einem Nullpunkt auf der Kalibrierplatte und einer imaginären Kameralochposition zu bestimmen. Diese jedoch liegt bei üblichen Objektiven mit Mehrfachlinsen an einer bestimmten Stelle im Objektiv. Bei der Kalibrierung bzw. bei der Durchführung des PIV-Verfahrens in geschlossenen Räumen, z. B. innerhalb eines Rohres, ist es erforderlich, einen Zugang zu dem Rohr zu schaffen, um die Kalibrierplatte in dem Raum platzieren zu können. Gleichzeitig muss sichergestellt sein, dass die Kalibrierung unter ähnlichen optischen Bedingungen wie die Messung erfolgt, d. h. es muss eventuell die Kalibrierung mit der gleichen Flüssigkeit und unter denselben Bedingungen in einem Rohr erfolgen, bei denen auch später die Messung erfolgt.

Bei vielen Objekten, wie z. B. in Mikrokanälen, ist eine sogenannte in-situ-Kalibrierung gar nicht oder nur mit erheblichem Aufwand zu realisieren, eben weil es überaus schwierig ist, die Kalibrierplatte dort unterzubringen.

Aus denselben oder ähnlichen Gründen wurden deshalb im Bereich des Computersehens und der Fotogrammetrie verschiedene Verfahren entwickelt, ohne Kalibrierhilfen zu einer genügend genauen Abbildungsgleichung zu gelangen. Dieses als Selbstkalibrierung bezeichnete Verfahren basiert darauf, dass in zwei Kamerabildern gleiche Punkte gefunden werden, sogenannte Punktkorrespondenzen, die zu dem selben Raumpunkt gehören. Bei Kenntnis genügend vieler Punktkorrespondenzen, einer vollständigen oder teilweisen Kenntnis der individuellen internen Kameraparameter und der Kenntnis einer absoluten Skalierung ist es dann möglich, die obige Abbildungsgleichung zu bestimmen, d. h. die restlichen internen Kameraparameter sowie die Orientierung und den Abstand der Kameras zueinander. Dieses Verfahren ist allerdings ohne Weiteres nicht auf das Stereo-PIV-Verfahren anwendbar, da es teilweise schwierig ist, die Punktkorrespondenzen zwischen den Kameras zu bestimmen. Dies liegt daran, dass nicht eine feste Oberfläche mit einer festen Struktur betrachtet wird, sondern sich bewegende Teilchen in einem durch einen Lichtschnitt gegebenen Volumen.

Des Weiteren ist aus der DE 198 01 615 A1 ein Kalibrierverfahren für Laserlichtschnittverfahren bekannt, wobei eine Kalibrierung der Auswerteeinheit durch einen quantitativen Vergleich eines von der Kamera im Strömungsobjekt aufgenommenen Bildes mit einem Abbildungsmaßstab mit einem außerhalb des Strömungsobjektes aufgenommenen Bildes mit einem weiteren Abbildungsmaßstab erfolgt. Nachteilig hierbei ist, dass die Kameras bei diesem Verfahren sehr schnell bewegt werden müssen.

Aus dem Aufsatz WILLERT C: "STEREOSCOPIC DIGITAL PARTICLE IMAGE VELOCIMETRY FOR APPLICATION IN WIND TUNNEL FLOWS" MEASUREMENT SCIENCE AND TECHNOLOGY, Bd. 8, Nr. 12, 12. Januar 1997 (1997-01-12), Seiten 1465-1479, XP020064381, ISSN: 0957-0233" ist ein Verfahren der eingangs genannten Art bekannt. Hierbei gilt grundsätzlich, dass die Kalibrierplatte in den seltensten Fällen deckungsgleich mit der Lichtschnittebene in dem zu untersuchenden Volumen angeordnet werden kann. Vielmehr wird es so sein, dass sich die Kalibrierplatte räumlich verdreht und verschoben zu dem Lichtschnitt im Volumen befindet. Für eine genaue Kalibrierung ist allerdings erforderlich, dass hier Deckungsgleichheit herrscht. Es ist theoretisch möglich, die Kalibrierplatte deckungsgleich zu der Lichtschnittebene in dem Volumen unterzubringen, allerdings nicht in der Praxis. Dies ist an sich auch von Willert erkannt worden, und insofern wird dort auch versucht, die Fehler zu korrigieren, die aufgrund der Verdrehung der Kalibrierplatte relativ zur Lichtschnittebene entstehen.

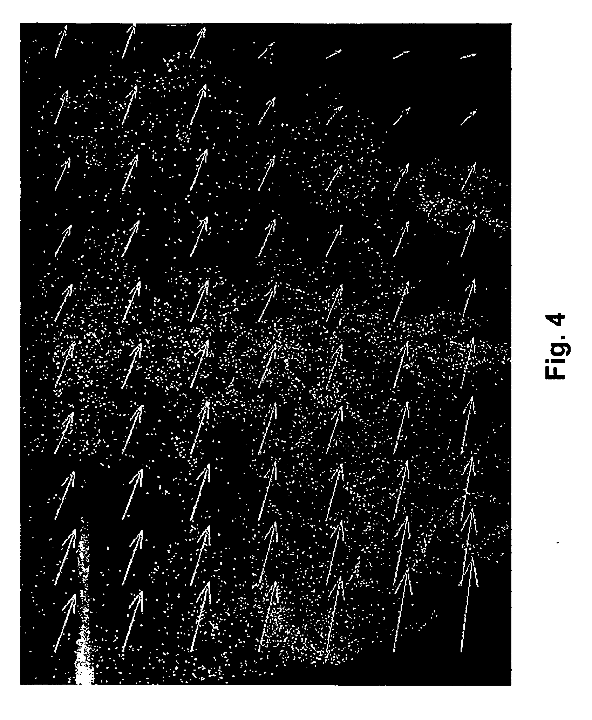

Hierbei wird zur Korrektur solcher aus der Deckungsungleichheit resultierenden Fehler derart vorgegangen, dass auf der Grundlage der durch die Kameras C1 und C2 aufgenommenen Bildern Punktkorrespondenzen berechnet werden, und zwar auf der Grundlage der Kalibrierung mit der Kalibrierplatte. Die Punktkorrespondenzen spiegeln sich wider in der sogenannten "disparity map" (Fig. 4). Das heißt, dass die "disparity map" die Abweichung zwischen Lichtschnitt und Kalibrierplatte in Form der zuvor genannten Punktkorrespondenzen zeigt. Somit ist die "disparity map" mathematisch äquivalent zu den Punktkorrespondenzen. Bei dem Stand der Technik (Willert C.) wird somit die Verschiebung aus der "disparity map" bei Stereo-PIV benutzt, um die Position der zu berechnenden Vektoren zu korrigieren. Dies geschieht durch eine Verschiebung der Interrogationsfelder allerdings zweidimensional um den Betrag der Vektoren aus der "disparity map".

Problematisch hierbei ist, dass hier nur eine Korrektur der Koordinaten in einem zweidimensionalen System erfolgt. Wie bereits zuvor anderer Stelle erläutert, ist allerdings dann, wenn die Kalibrierplatte und der Lichtschnitt räumlich zueinander verschoben und insbesondere verdreht sind, schlussendlich kaum etwas erreicht mit lediglich einer Korrektur in der Ebene, vielmehr ist erforderlich, dass die Stellung der Kalibrierplatte relativ zum Lichtschnitt im Raum bestimmt wird und hier eine Korrektur vorgenommen wird. Das heißt, bei dem Stand der Technik (Willert C.) erhält man nur eine zweidimensionale Korrektur der dreidimensionalen Abbildungsgleichung, das heißt, es fehlt eine Raumrichtung.

Der Erfindung liegt daher die Aufgabe zugrunde, eine Möglichkeit zur Kalibrierung von Stereo-PIV-Verfahren aufzuzeigen, die die oben beschriebenen Nachteile vermeidet, d. h. der Aufwand zur Kalibrierung soll gering sein und die Kalibrierung soll auch in geschlossenen Räumen bzw. auch in Mikrokanälen durchzuführen sein.

Die Aufgabe wird erfindungsgemäß dadurch gelöst, dass mit Hilfe bekannter interner und externer Kameraparameter mittels eines Triangulationsverfahrens die absolute Lage des Lichtschnittes im Raum bestimmt wird, wobei dann durch eine Koordinationstransformation die Abbildungsgleichung bestimmt wird.

Wesentlich bei dem erfindungsgemäßen Verfahren ist nunmehr die Ermittlung der oben beschriebenen Punktkorrespondenzen zwischen den mindestens zwei Kameras. Die Ermittlung der Punktkorrespondenzen erfolgt - wie bereits ausgeführt - durch die sogenannte optische Kreuzkorrelation. Bei der optischen Kreuzkorrelation wird ein Kamerabild zu einem bestimmten Zeitpunkt t von einer Kamera aufgenommen, wobei das gleiche Kamerabild von der zweiten Kamera zum gleichen Zeitpunkt t aus einer anderen Richtung aufgenommen wird. Das heißt, die Kamerabilder zeigen jeweils den gleichen Ausschnitt, aber aufgrund der Optik der betrachtenden Kameras erscheinen die Bilder relativ zueinander verschoben, verdreht oder verzerrt. Um das Maß für die Verschiebung der Kamerabilder zu bestimmen, wird ein jedes einzelne Kamerabild in einzelne Abschnitte unterteilt, sogenannte Interrogationsfelder. Das heißt, dass ein Kamerabild, z. B. aus 20 x 20 Interrogationsfeldern besteht. Nun wird ein Interrogationsfeld aus dem ersten Kamerabild bestimmt, und das entsprechende korrelierende Interrogationsfeld aus dem zweiten Kamerabild. Der Abstand des Interrogationsfeldes des ersten Kamerabildes zu dem Interrogationsfeld des zweiten Bildausschnittes bildet dann das Maß für die Verschiebung der betrachteten Kamerabilder durch die Kameraoptik. Dieses Maß für den Abstand bildet schlussendlich den höchsten Korrelationspeak in der zweidimensionalen Korrelationsfunktion (dx, dy), wobei die Position dieses Peaks im Korrelationsfeld die Position der jeweiligen Kamera $(x_1, y_1)$; $(x_2, y_2)$ wiedergibt. Damit ergibt sich für jedes Interrogationsfeld eine Punktkorrelation $x_1, y_1 \leftrightarrow$ zu $x_2, y_2$.

Dann können mit Hilfe eines oder mehrerer interner Kameraparameter, mit Hilfe der Punktkorrespondenzen und einer absoluten Längenskalierung die übrigen internen und externen Kameraparameter bestimmt werden, wobei die komplette Abbildungsgleichung mit einem Näherungsverfahren, beispielsweise mit Hilfe des Levenberg-Marquardt-Algorithmus ermittelt wird.

Es besteht nun immer die Gefahr, dass die Punktkorrespondenzen fehlerhaft ermittelt wurden. Das heißt, dass die einzelnen Interrogationsfelder des einen Kamerabildes nicht zu denen des anderen Kamerabildes passen. Mit Hilfe des bekannten RANSAC-Verfahrens können diese fehlerhaften Punktkorrespon-denzen eliminiert werden, und zwar dadurch, dass dieses RANSAC-Verfahren als Algorithmus dem eigentlichen Näherungsverfahren aufgesetzt wird.

Da nicht eine feste Oberfläche, sondern Teilchen in einem Volumen definiert durch den Lichtschnitt beobachtet werden, erscheinen Teilchenanordnungen von der einen Kamera gesehen unter Umständen gravierend anders als von der anderen Kamera betrachtet, da die Teilchen im Raum - Tiefe des Lichtschnitts - angeordnet sind. Die Kreuzkorrelation zwischen den beiden Kamerabildern ist daher sehr fehleranfällig, da der korrekte Korrelationspeak stark verschmiert ist und oft niedriger als ein zufälliger Rauschpeak ist und daher nicht erkannt wird. Diese Fehlermöglichkeit wird in vorteilhafter Weise dadurch behoben, dass zu aufeinanderfolgenden Zeiten $t_0$ bis $t_n$ jeweils zwei oder mehr Kamerabilder der mindestens zwei Kameras aufgenommen werden, wobei zu jedem Zeitpunkt $t_0$ bis $t_n$ mit Hilfe dieser Bilder die zweidimensionale Korrelationsfunktion $c_0$ (dx, dy) bis $C_n$ (dx,dy) mittels der optischen Kreuzkorrelation ermittelt wird, wobei die Korrelationsfunktionen $c_0$ bis $c_n$ aufsummiert werden, und wobei dann nach Ermittlung des höchsten Korrelationspeaks die Verschiebung dx, dy der jeweiligen Interrogationsfelder und damit die Punktkorrespondenzen ermittelt werden.

Anhand der Zeichnungen wird die Erfindung nachstehend beispielhaft näher erläutert.

Figur 1     zeigt einen typische Stereo-PIV-Aufbau;

Figur 2     zeigt schematisch die Entstehung von Korrelationsfeldern aus der Kreuzkorrelation von Kamera 1 und 2;

Figur 3     zeigt die bei Figur 2 entstehenden Korrelationsfelder aus dem ersten Laser (links) und dem zweiten Laser (rechts);

Figur 4     zeigt den Verschiebungsvektor berechnet aus der Position des höchsten Korrelationspeaks vergrößert um einen bestimmten Faktor zur besseren Visualisierung.

**Beispiel 1:**

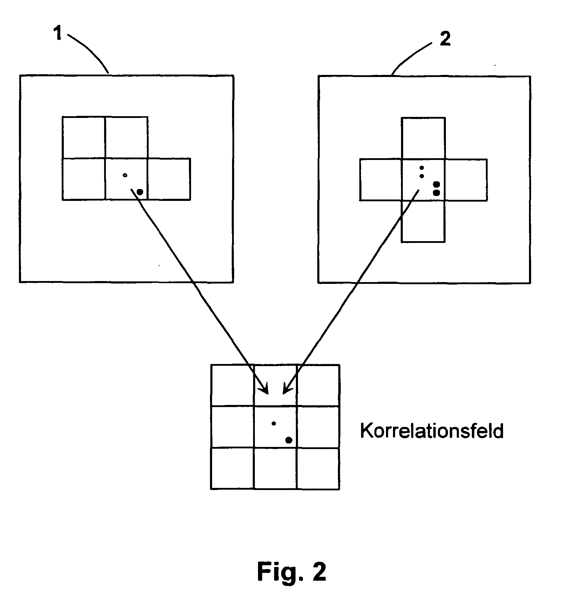

Es wird ein üblicher Stereo-PIV-Aufbau mit zwei Kameras (Figur 1 und 2) zu Grunde gelegt, bei dem die Kameras entlang der x-Achse positionierbar sind und unter einem Winkel von typischerweise 30 - 50° von beiden Seiten auf die Lichtschnittebene ausgerichtet sind, wobei die Lichtschnittebene durch die x-y-Ebene bei z=0 definiert ist. Beide Kameras liegen damit bei z=-Zcam. Die optischen Hauptachsen der Kameras sind koplanar und liegen in einer gemeinsamen x-y-Ebene. Zwei gepulste Laser 3 erzeugen kurz nacheinander mit Hilfe einer Lichtschnittoptik 4 an derselben Position den Lichtschnitt 5, wobei die beiden Kameras zwei Bilder 6 kurz hintereinander aufnehmen, in jedem Bild einen Laserpuls.

Es wird in diesem Beispiel davon ausgegangen, dass eine Volumenkalibrierung unabhängig vom eigentlichen Lichtschnitt bereits erfolgt ist, indem z. B. eine 3D-Kalibrierplatte von beiden Kameras simultan aufgenommen wurde. Damit sind alle internen und externen Abbildungsparameter relativ zu einem Koordinatensystem basierend auf der Position der Kalibrierplatte bekannt.

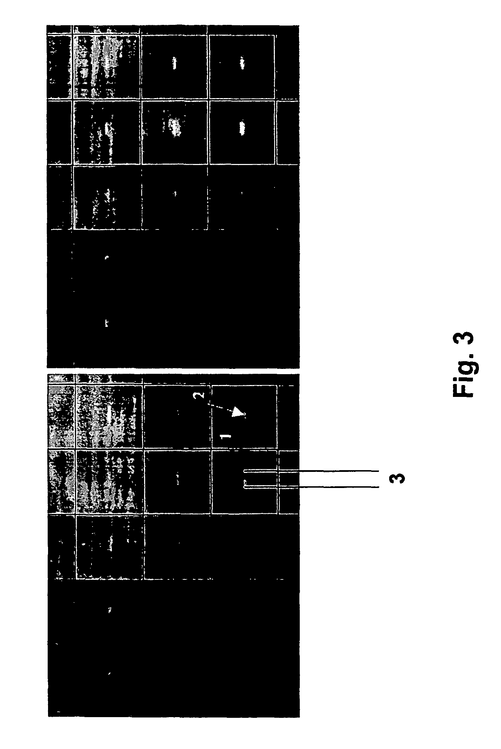

Mit Hilfe der optischen Kreuzkorrelation zwischen bei der eigentlichen Messung simultan aufgenommenen Teilchenbildern wird bei Mittelung über Korrelationsfelder, die zu unterschiedlichen Zeiten aufgenommen werden, ein summiertes Korrelationsfeld für jedes Interrogationsfenster (Figur 3, Nr. 1), ermittelt und aus der Position des höchsten Korrelationsspeaks (Figur 3, Nr. 2 - entspricht einem Pfeil in Bild 3) ergeben sich damit die Punktkorrespondenzen zwischen Kamera 1 und 2 (Bild 4). Der Fußpunkt der Pfeile zeigt die Position eines Interrogationsfensters im Bild von Kamera 1, und der Endpunkt zeigt den korrespondierenden Punkt im Bild von Kamera 2, wobei Fußpunkt und Endpunkt zusammen eine Punktkorrespondenz bilden.

Aus den Punktkorrespondenzen wird dann mit Hilfe der bekannten Abbildungsgleichung mittels Triangulation die absolute Lage des Lichtschnitts im Raum bestimmt und durch eine geeignete Koordinatentransformation die Lichtschnittebene als z=0 definiert. Damit ist die Abbildung für die Lichtschnittebene bestimmt und kann für die eigentliche Stereo-PIV-Auswertung benutzt werden. Der Vorteil von diesem Verfahren liegt darin, dass die Kalibrierplatte nicht genau auf die Lichtschnittebene positioniert werden muss, sondern irgendwo im Raum, und trotzdem eine hochgenaue Kalibrierung auf die Lichtschnittebene berechnet werden kann.

Zusätzlich ergibt sich aus der Breite des Korrelationspeaks (Figur 3, Nr. 3) und einem leicht zu errechnenden geometrischen Faktor direkt die Dicke des Lichtschnittes. Figur 3 links zeigt die Korrelationsfelder von Laser 1 und Figur 3 rechts die von Laser 2. Aus der relativen Lage der beiden Lichtschnitte im Raum und ihrer Dicke ergibt sich damit, inwieweit die beiden Lichtschnitte sich überlappen und für die PIV-Messung geeignet sind.

### Beispiel 2:

Es wird der gleiche Versuchsaufbau wie bei Beispiel 1 vorausgesetzt. Zugleich wird angenommen, dass das Kameraobjektiv in einem Winkel zur Kameraebene steht, um die Scheimplugbedingung zu erfüllen, damit alle Teilchen in der Lichtschnittebene im Fokus sind. In diesem Beispiel steht allerdings keine vorherige Kalibrierung zur Verfügung, sondern aus den Punktkorrespondenzen selbst soll eine Abbildungsgleichung bestimmt werden.

Dies geschieht durch ein direktes Näherungsverfahren, bei dem die fehlenden Abbildungsparameter gefittet werden. Da es zu viele freie Parameter gibt, müssen bestimmte Annahmen gemacht werden, um zu einer Lösung zu konvergieren. Dazu gibt es verschiedene Möglichkeiten mit Hilfe von bekannten Umständen, um die Anzahl der freien Parameter zu reduzieren:

Es wird angenommen, dass aus einer vorherigen Kalibrierung des Scheimplugadapters, die nur einmal durchzuführen ist, bekannt ist, wie sich der Hauptpunkt als Funktion des Winkels verschiebt oder die Scheimplugbedingung wird direkt aus der Geometrie berechnet. Damit braucht der Hauptpunkt nicht mitgefittet zu werden, sondern ist eine Funktion der externen Beobachtungswinkel, die gefittet werden.

Ebenso wird mit der Bildweite verfahren. Die Bildweite wird dabei aus der Linsengleichung $1/B + 1/G = 1/f$ berechnet, mit B = Bildweite, G = Gegenstandswert und f = bekannte Brennweite des Kameraobjektives. Während des Näherungsverfahrens wird damit die Brennweite als Funktion der Gegenstandsweite berechnet, wobei G als freier externer Parameter gefittet werden muss. Alternativ zur Linsengleichung kann man vorher für jede Kamera separat die Abhängigkeit der Bildweite von der Gegenstandsweite empirisch eichen.

Zusätzlich besteht die Möglichkeit die Anzahl der freien Parameter weiter zu reduzieren, indem man ausnutzt, dass die optischen Hauptachsen in diesem Fall koplanar sind.

Der Vorteil von diesem Verfahren ist, dass auf eine in-Situ Kalibrierung vollständig verzichtet werden kann, wobei sich die Abbildungsgleichung vollständig aus den berechneten Punktkorrespondenzen unter Annahme einiger bekannter Umstände berechnen lässt.

Für den PIV-Anwender erleichtert sich damit der Messablauf erheblich.

### Patentansprüche

1. Verfahren zur Bestimmung der Abbildungsgleichung für die Selbstkalibrierung in Bezug auf die Durchführung von Stereo-PIV-Verfahren bei visualisierten Strömungen, umfassend mindestens zwei Kameras (1, 2) und einen Bildausschnitt, wobei die Kameras in etwa den gleichen Bereich des Lichtschnittes (5), aber aus unterschiedlichen Richtungen betrachten, wobei die Ermittlung der Punktkorrespondenzen zwischen den zwei Kameras durch Messung der Verschiebung der jeweiligen Interrogationsfelder in den Kamerabildern mittels optischer Kreuzkorrelation erfolgt,
**dadurch gekennzeichnet,**
**dass** mit Hilfe bekannter interner und externer Kameraparameter mittels eines Triangulationsverfahrens die absolute Lage des Lichtschnittes im Raum bestimmt wird, wobei dann durch eine Koordinatentransformation die Abbildungsgleichung bestimmt wird.

2. Verfahren nach Anspruch 1,
**dadurch gekennzeichnet,**
**dass** die internen Kameraparameter die Brennweite, Lage der optischen Achsen $(x_0, y_0)$ und Verzerrungsparameter der Kameraoptik beinhalten.

3. Verfahren nach Anspruch 1,
**dadurch gekennzeichnet,**
**dass** die externen Parameter die Lagen und Orientierung der Kameras zueinander beinhalten.

4. Verfahren nach einem oder mehrere der voranstehenden Ansprüche,
**dadurch gekennzeichnet,**
**dass** bei Kenntnis eines oder mehrerer interner Kameraparameter mit Hilfe der Punktkorrespondenzen und einer absoluten Längenskalierung die übrigen internen und externen Kameraparameter bestimmbar sind, um so die Abbildungsgleichung zu ermitteln.

5. Verfahren nach einem oder mehrere der voranstehenden Ansprüche,
**dadurch gekennzeichnet,**
**dass** bei aufeinander folgenden Zeiten $t_0$ bis $t_n$ jeweils zwei oder mehr Kamerabilder der mindestens zwei Kameras aufgenommen werden, wobei zu jedem Zeitpunkt $t_0$ bis $t_n$ mit Hilfe dieser Bilder die zweidimensionale Korrelationsfunktion $c_0$ (dx, dy) bis $C_n$ (dx, dy) mittels der optischen Kreuzkorrelation ermittelt wird, wobei die Korrelationsfunktionen $c_0$ bis $c_n$ aufsummiert werden, und wobei dann nach Ermittlung des höchsten Korrelationspeaks die Verschiebung dx, dy der jeweiligen Interrogationsfelder und damit die Punktkorrespondenzen ermittelt werden.

6. Verfahren nach einem oder mehrere der voranstehenden Ansprüche,
**dadurch gekennzeichnet,**
**dass** das Näherungsverfahren auf dem Levenberg-Marquardt-Algorithmus aufbaut.

7. Verfahren nach Anspruch 6,
**dadurch gekennzeichnet,**
**dass** dem Levenberg-Marquardt-Algorithmus der RANSAC-Algorithmus aufgesetzt wird.

8. Verfahren nach Anspruch 1,
**dadurch gekennzeichnet,**
**dass** durch jede Kamera zwei Bilder kurz nacheinander aufgenommen werden und mit Hilfe einer Kreuzkorrelation zwischen den Bildern zum Zeitpunkt t und t+dt zusätzliche Punktkorrespondenzen bestimmt werden.

9. Verfahren nach Anspruch 1,
**dadurch gekennzeichnet,**
**dass** die optischen Achsen von mindestens zwei Kameras koplanar zueinander angeordnet sind.

10. Verfahren nach Anspruch 5,
**dadurch gekennzeichnet,**
**dass** durch die Breite des Korrelationspeaks und einen geometrischen Faktor die Lichtschnittdicke der beiden Lichtschnitte bestimmt wird und damit zusammen mit der Position der Lichtschnitte im Raum genau bestimmt werden kann, inwieweit die Lichtschnitte überlappen und für eine Stereo-PIV-Messung geeignet sind.

11. Verfahren nach Anspruch 4,
**dadurch gekennzeichnet,**
**dass** unter der Annahme einer Fokussierung auf die Teilchen im Lichtschnitt beim Näherungsverfahren die Bildweite als Funktion der Brennweite des Objektivs und des Abstandes des Lichtschnitts von der Kamera berechnet wird und damit nicht mehr gefittet werden muss.

12. Verfahren nach Anspruch 4,
**dadurch gekennzeichnet,**
**dass** bei Verwendung eines Scheimplugadapters unter der Annahme einer optimalen Einstellung des Scheimpflugadapters beim Näherungsverfahren der Winkel zwischen Kamerachip und Hauptachse und die Lage des Hauptpunktes auf dem Kamerachip aus den externen Abbildungsparametern berechnet werden und damit nicht mehr gefittet werden müssen.

13. Verfahren nach Anspruch 5,
**dadurch gekennzeichnet,**
**dass** durch die Breite des Korrelationspeaks und durch die Abbildungsgeometrie die Lichtschnittdicke der beiden Lichtschnitte bestimmt wird und damit zusammen mit der Position der Lichtschnitte im Raum genau bestimmt werden kann, inwieweit die Lichtschnitte überlappen und für eine Stereo-PIV-Messung geeignet sind.

## Claims

1. A method for determining the imaging equation for self calibration with regard to performing stereo-PIV methods on visualized flows, said method being comprised of at least two cameras (1, 2) and one image sector, with the cameras viewing approximately the same area of the illuminated section (5) but from different directions, the point correspondences between the two cameras being determined by measuring the displacement of the respective interrogation areas in the camera images using optical cross-correlation,
**characterized in that**
with the aid of known internal and external camera parameters by means of a triangulation method the absolute position of the illuminated section in space is determined, with the imaging equation then being determined by means of a transformation of coordinates.

2. The method according to claim 1,
**characterized in that**
the internal camera parameters include the focal length, the position of the optical axes $(x_0, y_0)$ and distortion parameters of the camera optics.

3. The method according to claim 1,
**characterized in that**
the external parameters include the positions and orientation of the cameras relative to each other.

4. The method according to one or more of the preceding claims,
**characterized in that,**
if one or several internal camera parameters are known, the other internal and external camera parameters are determinable using the point correspondences and an absolute length scale in order to thus determine the imaging equation.

5. The method according to one or more of the preceding claims,
**characterized in that**
two or more camera images are taken by the at least two cameras at sequential times to to $t_n$, the two-dimensional correlation function $c_0$ (dx, dy) to $c_n$ (dx,

dy) being determined by means of optical cross-correlation at each time to to $t_n$ using these images, the correlation functions $c_0$ to $c_n$ being added up and the displacement dx, dy of the respective one of the interrogation areas and, as a result thereof, the point correspondences being determined after determination of the highest correlation peak.

6. The method according to one or more of the preceding claims,
   **characterized in that**
   the approximation method is based on the Levenberg-Marquardt algorithm.

7. The method according to claim 6,
   **characterized in that**
   the RANSAC algorithm is superimposed on the Levenberg-Marquardt algorithm.

8. The method according to claim 1,
   **characterized in that**
   each camera takes in short succession two images and that additional point correspondences are determined using a cross-correlation between the images at the times t and t+dt.

9. The method according to claim 1,
   **characterized in that**
   the optical axes of at least two cameras are disposed coplanar to each other.

10. The method according to claim 5,
    **characterized in that**
    the section thickness of the two illuminated sections is determined through the width of the correlation peak and a geometrical factor and that, together with the position of the illuminated sections in the space, said thickness serves to determine the overlap between the two illuminated sections and whether they are suited for stereo PIV measurement.

11. The method according to claim 4,
    **characterized in that,**
    with assumption of focussing on the particles in the illuminated section during the approximation method, the image width is calculated as a function of the focal length of the objective and of the spacing between the illuminated section and the camera and needs no longer be fitted as a result thereof.

12. The method according to claim 4,
    **characterized in that,**
    if a Scheimpflug adapter is used and with assumption that said Scheimpflug adapter is optimally adjusted, during the approximation method the angle between camera chip and main axis and the position of the principal point on the camera chip are computed from the external image parameters and need no longer be fitted as a result thereof.

13. The method according to claim 5,
    **characterized in that,**
    the section thickness of the two illuminated sections is determined through the width of the correlation peak and the image geometry and that, together with the position of the illuminated sections in the space, said thickness serves to determine precisely the overlap between the two illuminated sections and whether they are suited for stereo PIV measurement.

## Revendications

1. Procédé de détermination de l'équation de représentation pour l'auto-étalonnage de procédés stéréo-PIV sur les courants visualisés, qui utilise au moins deux appareils de prise de vues (1, 2) et un extrait d'image, dans lequel les appareils de prise de vues visent approximativement la même région de la coupe optique (5) mais dans des directions différentes, et dans lequel la détection des correspondances ponctuelles entre les deux appareils de prise de vues s'effectue par une mesure du décalage des champs d'interrogation dans les images des appareils de prise de vues effectuée au moyen d'une corrélation croisée optique,
   **caractérisé en ce que**
   la position absolue de la coupe optique dans l'espace est déterminée à l'aide de paramètres internes et externes connus des appareils de prise de vues et par application d'un procédé de triangulation, l'équation de représentation étant ensuite déterminée par une transformation de coordonnées.

2. Procédé selon la revendication 1,
   **caractérisé en ce que**
   les paramètres internes des appareils de prise de vues comprennent la distance focale, la position des axes optiques $(x_0, y_0)$ et les paramètres de distorsion de l'optique des appareils de prise de vues.

3. Procédé selon la revendication 1,
   **caractérisé en ce que**
   les paramètres externes comprennent les emplacements des appareils de prise de vues et leur orientation l'une par rapport à l'autre.

4. Procédé selon l'une ou plusieurs des revendications précédentes,
   **caractérisé en ce que**
   si un ou plusieurs paramètres internes des appareils de prise de vues sont connus, il est possible de trouver les autres paramètres internes et externes des appareils de prise de vues à l'aide des correspondances ponctuelles et d'un cadrage absolu des longueurs, et ainsi de définir l'équation de représentation.

**5.** Procédé selon l'une ou plusieurs des revendications précédentes,
**caractérisé en ce que**
deux ou plus de deux images des au moins deux appareils de prise de vues sont prises à chacun de plusieurs instants successifs $t_0$ à $t_n$, et, à chaque instant $t_0$ à $t_n$, la fonction de corrélation bidimensionnelle $c_0$ (dx, dy) à $c_n$ (dx, dy) est définie à l'aide de ces images au moyen de la corrélation croisée optique, les fonctions de corrélation $c_0$ à $c_n$ étant additionnées et le décalage dx, dy des champs d'interrogation et donc les correspondances ponctuelles étant ensuite définies après la détermination du plus haut pic de corrélation.

**6.** Procédé selon l'une ou plusieurs des revendications précédentes,
**caractérisé en ce que**
le procédé par approximation est basé sur l'algorithme de Levenberg-Marquardt.

**7.** Procédé selon la revendication 6,
**caractérisé en ce que**
l'algorithme de RANSAC est superposé à l'algorithme de Levenberg-Marquardt.

**8.** Procédé selon la revendication 1,
**caractérisé en ce que**
deux images sont prises à des instants rapprochés par chaque appareil de prise de vues et des correspondances ponctuelles supplémentaires sont déterminées à l'aide d'une corrélation croisée entre les images à l'instant t et à l'instant t+dt.

**9.** Procédé selon la revendication 1,
**caractérisé en ce que**
les axes optiques d'au moins deux appareils de prise de vues sont placés de façon à être coplanaires entre eux.

**10.** Procédé selon la revendication 5,
**caractérisé en ce que**
l'épaisseur des deux coupes optiques peut être déterminée par la largeur du pic de corrélation et un facteur géométrique et peut ainsi être déterminée avec précision en même temps que la position des coupes optiques dans l'espace, dans la mesure où les coupes optiques se chevauchent et sont appropriées pour une mesure stéréo-PIV.

**11.** Procédé selon la revendication 4,
**caractérisé en ce que**
en supposant une focalisation sur les particules situées dans la coupe optique dans le procédé par approximation, la distance de l'image est calculée en fonction de la distance focale de l'objectif et de la distance de la coupe optique à l'appareil de prise de vues et n'a donc plus à être ajustée.

**12.** Procédé selon la revendication 4,
**caractérisé en ce que,**
dans le cas de l'utilisation d'un adaptateur de Scheimpflug et en supposant un réglage optimal de l'adaptateur de Scheimpflug dans le procédé par approximation, l'angle entre le capteur de l'appareil de prise de vues et l'axe principal et la position du point principal sur le capteur de l'appareil de prise de vues sont calculés à partir des paramètres externes de représentation et n'ont donc plus à être ajustés.

**13.** Procédé selon la revendication 5,
**caractérisé en ce que**
l'épaisseur des deux coupes optiques est déterminée par la largeur du pic de corrélation et par la géométrie de la représentation et peut donc être déterminée avec précision en même temps que la position de la coupe optique dans l'espace, dans la mesure où les coupes optiques se chevauchent et conviennent pour une mesure stéréo-PIV.

Fig. 1

Korrelationsfeld

**Fig. 2**

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19928698 A1

- DE 19801615 A1

**In der Beschreibung aufgeführte Nicht-Patentliteratur**

- **WILLERT C.** STEREOSCOPIC DIGITAL PARTICLE IMAGE VELOCIMETRY FOR APPLICATION IN WIND TUNNEL FLOWS. *MEASUREMENT SCIENCE AND TECHNOLOGY,* Januar 1997, vol. 8 (12), 1465-1479